# EUROPEAN PATENT APPLICATION

(11) **EP 1 020 349 A2**
(43) Date of publication of application: **19.07.2000**
(21) Application number: 00200083.4
(22) Date of filing: 11.01.2000
(51) Int. Cl.: B62J 21/00, B62J 15/02

(54) **Device for attaching a dress-guard, and such a dress-guard**

(30) Priority: 14.01.1999 NL 1011024
(71) Applicant: Hesling B.V., 7071 CK Ulft (NL)
(72) Inventor: Heukshorst, Leon Nicodemus Jozephus, 7075 AZ Etten (NL); Kruisselbrink, Herman Jan, 7101 LR Winterswijk (NL)
(74) Representative: Van Breda, Jacobus

(57) **Abstract**

The invention relates to a device for attaching a dress-guard (4) to a mudguard (2) which comprises braces (5) attachable to the mudguard (2), and which dress-guard (4) has a rim (6) designed to follow the contour of the mudguard (2). The rim (6) is provided with slits (7) that are capable to clampingly receive the braces (5).

## Description

The invention relates to a device for attaching a dress-guard to a mudguard which comprises braces attachable to the mudguard, and which dress-guard has a rim designed to follow the contour of the mudguard. Furthermore, the invention relates to such a dress-guard.

A dress-guard and a device for attaching this dress-guard to a mudguard is known from the Dutch patent application No. 9402127 by applicant. The known apparatus is having at least one bendable clamping band having adjustable length and which is placeable over the mudguard in order to connect to a circumferential rim of the dress-guard on both sides of the mudguard. The clamping band is provided with several adjustment organs distributed over its length in order to adjustably cooperate with a contra-organ. The clamping band is therefore arranged as a binding stay having a large number of sawteeth working as adjustment organs, while the contra-organ is provided with a stopnotch that can cooperate with these sawteeth. When the dress-guard according to the state of the art is mounted, it lies adjacent to the rim of the mudguard and a number of clamping bands are visibly arranged over the mudguard for the attachment of the dress-guard.

It is the purpose of the invention to provide a device for the attachment of a dress-guard and to provide such a dress-guard which is mountable in a more simple way, and which dress-guard after being mounted more closely follows the mudguard in order to improve its visual appearance.

The device for attaching a dress-guard and the dress-guard are therefore according to the invention characterized in that the rim is provided with slits that are capable to clampingly receive the braces.

It is preferable that at least one slit is shaped by a recess formed in the rim which is partly defined by a lip extending in the circumference of the rim. Such an embodiment may be manufactured particularly well in die-casting technology.

An optimal technical effect in regard of the seamless transition from dress-guard to mudguard is provided in the embodiment which is characterized in that the rim is placed next to the plane of the substance of the dress-guard at a distance approximately equal to the combined thickness of the mudguard and the brace. After attaching the dress-guard to the mudguard its rim will then lie behind the rim of the mudguard.

In this respect it is further advantageous that the braces are placed on the inside of the mudguard, that at least one brace is shaped corresponding to the inner counter of the mudguard and that at its both extensions part of the brace is placed at a distance from the mudguard which is approximately equal to the thickness of the dress-guard. In this way, the slit of the dress-guard, and in particular the lip that forms the slit, provides in cooperation with the brace and the mudguard the clamping connection of the dress-guard to the mudguard.

The simplicity and the ease of attaching the dress-guard to the mudguard is promoted when the braces and the slits that cooperate with the braces are arranged such that when mounting the dress-guard by rotation of its rim along the contour of the mudguard, the connection of the dress-guard to the mudguard is completed by the subsequent cooperation of the respective brace-slit combinations.

The invention shall now further be elucidated with reference to the drawing, in which
Figs. 1 and la show part of a bicycle in side-view and front-view respectively having the dress-guard mounted according to the invention;
Fig. 2 shows in detail in a perspective view the dress-guard mounted according to the invention;
Fig. 3 shows a cross-sectional view of dress-guards according to the invention mounted to a mudguard; and
Fig. 4 shows a number of subsequent steps when mounting the dress-guard according to the invention.

Same reference numerals used in the Figures refer to the same parts.

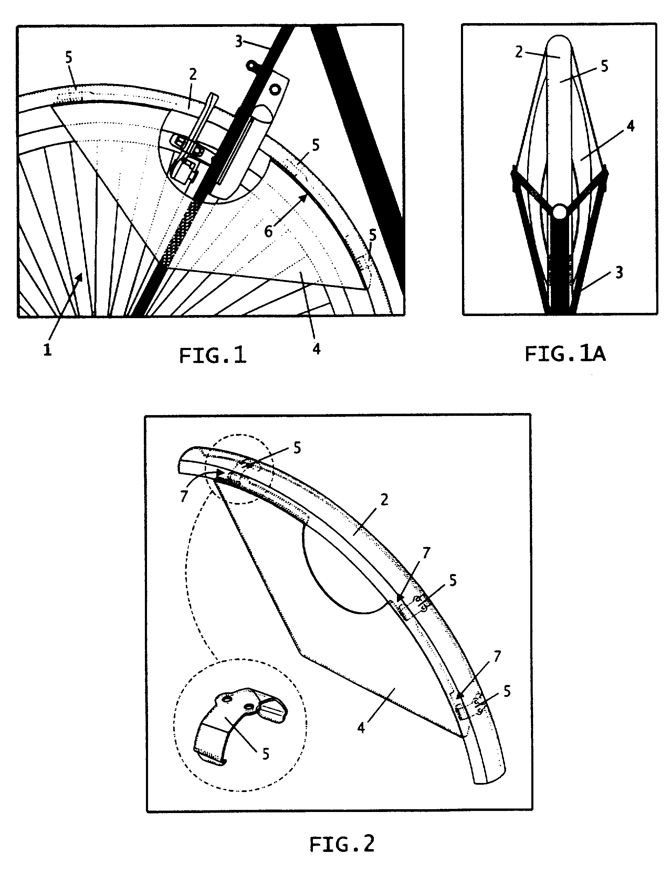

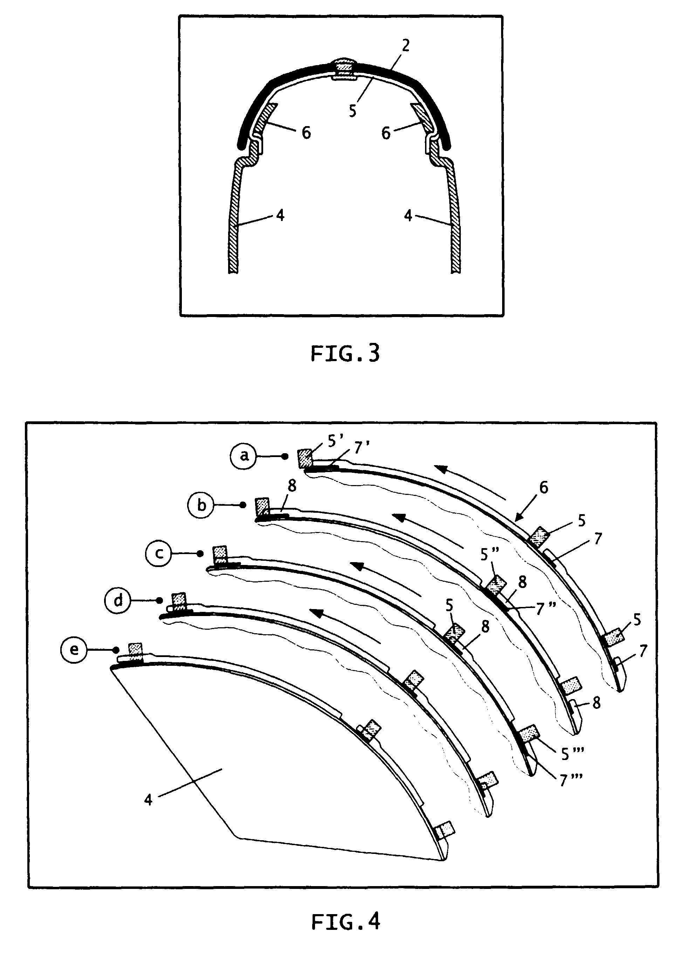

With reference to Figs. 1 and la, a part is shown in the vicinity of a back-wheel 1 of a bicycle along which a mudguard 2 is provided, which is mounted amongst others to a back-fork 3 of the bicycle. Figs. 1 and la show further the dress-guard 4 according to the invention, showing in Fig. 1 in broken lines the braces 5 that are placed at the inside of the mudguard 2. As clearly shown in Fig. 1, the dress-guard 4 according to the invention has a rim 6 which accurately follows the contour of the mudguard 2, which rim 6, as more clearly shown in Figs. 2 and 4, is having slits 7 that are capable to clampingly receive braces 5 that may be fixed or connectable to the mudguard 2. Fig. la shows the spherical shape which is caused by the placement of the dress-guard 4 according to the invention so as to cover the back-fork 3 of the bicycle on its side facing away the back-wheel.

Figs. 2 and 4 clearly show that the slits 7 are made by a recess that is provided in the rim 6, which is partly limited by a lip 8 which extends in the circumferential direction of the rim 6.

Fig. 3 shows that the rim 6 is placed next to the plane of the substance of the dress-guard 4 at a distance approximately equal to the combined thickness of the mudguard 2 and the brace 5. In this Fig. 3 it is further shown that such braces 5 are placed at the inside of the mudguard 2 having a shape that corresponds to the inner contour of the mudguard 2, and that at its both extensions, part of the brace 5 is placed at a distance of the mudguard 2 which is approximately equal to the thickness of the dress-guard 4. This leads to the required clamping connection of the dress-guard 4 to the mudguard 2.

Fig. 4 shows in its figure parts a to e the manner in which the attachment of the dress-guard to the not shown mudguard 2 proceeds in order to elucidate the aspect of the invention that the braces 5 and the slits 7 that cooperate with these braces 5 are arranged such that when mounting the dress-guard 4 by rotation of its rim 6 (see subsequently figure parts a, b, c, d and e) along the contour of the mudguard, the connection of the dress-guard 4 to the mudguard 2 is completed by the subsequent cooperation of the respective brace-slit combinations. This is shown in the respective figure parts by the initial getting operational of the brace-slit combination 5', 7' in Fig. a, the subsequent getting operational of the brace-slit combination 5'', 7'' in Fig. b, and the subsequent getting operational of the brace-slit combination 5''', 7'' in Fig. c, whereafter by further rotation of the dress-guard as shown in figure parts d and e, the connection of the dress-guard to the mudguard is completed.

## Claims

1. Device for attaching a dress-guard (4) to a mudguard (2) which comprises braces (5) attachable to the mudguard (2), and which dress-guard (4) has a rim (6) designed to follow the contour of the mudguard (2), **characterized** in that the rim (6) is provided with slits (7) that are capable to clampingly receive the braces (5).

2. Device according to claim 1, **characterized** in that at least one slit (7) is shaped by a recess formed in the rim (6) which is partly defined by a lip (8) extending in the circumference of the rim (6).

3. Device according to claim 1 or 2, **characterized** in that the rim (6) is placed next to the plane of the substance of the dress-guard at a distance approximately equal to the combined thickness of the mudguard (2) and the brace (5).

4. Device according to any one of claims 1-3, **characterized** in that the braces (5) are placed on the inside of the mudguard (2), that at least one brace is shaped corresponding to the inner counter of the mudguard (2) and that at its both extensions part of the brace is placed at a distance from the mudguard which is approximately equal to the thickness of the dress-guard (4).

5. Device according to any one of claims 1-4, **characterized** in that the braces (5) and the slits (7) that cooperate with the braces (5) are arranged such that when mounting the dress-guard (4) by rotation of its rim (6) along the contour of the mudguard (2), the connection of the dress-guard (4) to the mudguard (2) is completed by the subsequent cooperation of the respective brace-slit combinations.

6. Dress-guard (4) for attachment to a mudguard (2) having a rim (6) designed to follow the contour of the mudguard (2), **characterized** in that the rim (6) is provided with slits (7) that are capable to clampingly receive braces (5) that are connectable to the mudguard (2).

7. Dress-guard according to claim 6, **characterized** in that at least one slit (7) is shaped by a recess formed in the rim (6) which is partly defined by a lip (8) extending in the circumference of the rim (6).

8. Dress-guard according to claim 6 or 7, **characterized** in that the rim (6) is placed next to the plane of the substance of the dress-guard at a distance approximately equal to the combined thickness of the mudguard (2) and the brace (5).

9. Dress-guard according to any one of claims 6-8, **characterized** in that it is mountable so as to cover the back-fork (3) of a bicycle on the side facing away from the wheel.
